# EUROPÄISCHE PATENTANMELDUNG

(11) **EP 4 538 000 A1**
(43) Veröffentlichungstag der Anmeldung: **16.04.2025**
(21) Anmeldenummer: 24200775.5
(22) Anmeldetag: 17.09.2024
(51) Int. Cl.: B25J 15/00, B65G 47/90, B66C 1/46

(54) **LOCHGREIFER**

(30) Priorität: 18.09.2023 DE 102023125154
(71) Anmelder: KRONES AG, 93073 Neutraubling (DE)
(72) Erfinder: EHRISMANN, Tobias, 93073 Neutraubling (DE)
(74) Vertreter: v. Bezold & Partner Patentanwälte - PartG mbB

(57) **Zusammenfassung**

Die Erfindung betrifft u.a. einen Lochgreifer (10), der einen Druckluftanschluss (16), einen elastisch verformbaren Balgabschnitt (28), der unter Druckluftbeaufschlagung zum Festklemmen in einem Bauteilloch (14) eines Bauteils (12) aufblasbar ist, und einen Verbindungsabschnitt (18) mit einem Verbindungskanal (20), der den Druckluftanschluss (16) und den Balgabschnitt (28) zum Zuführen von Druckluft von dem Druckluftanschluss (16) zu dem Balgabschnitt (28) miteinander verbindet, aufweist. Der Druckluftanschluss (16), der Verbindungsabschnitt (18) und der Balgabschnitt (28) sind integral-einstückig miteinander verbunden.

## Beschreibung

### Technisches Gebiet

Die Erfindung betrifft einen Lochgreifer und eine Verwendung eines Lochgreifers. Die Erfindung betrifft ferner ein Verfahren zum Herstellen eines Lochgreifers und ein Computerprogrammprodukt.

### Technischer Hintergrund

Lochgreifer, wie Tieflochgreifer, können bspw. für Pick & Place -Aufgaben im Bereich Robotik, Packen und Palettieren usw. eingesetzt werden. Dabei besteht ein Lochgreifer meist aus vielen Einzelteilen. Durch eine Beaufschlagung mit Druckluft spreizt sich der Lochgreifer in ein Loch des für den Transport vorgesehenen Gegenstandes (z. B. Mündung einer Flasche etc.) und hält diesen somit fest.

Ein Lochgreifer kann bspw. mit einem aufblasbaren Balg versehen sein. Hier kann innen ein Überdruck angelegt werden, wodurch sich der Balg ballonartig aufblasen kann. Der Balg kann sich an eine Lochinnenwand anlegen und somit einen reibschlüssigen Kontakt mit dem zu transportierenden Gegenstand herstellen.

Alternativ kann ein Lochgreifer bspw. ein elastisch verformbares Element aufweisen. Hier kann durch einen pneumatischen Antrieb ein Stößel gezogen oder gedrückt werden. Der Stößel kann das elastisch verformbare Element stauchen. Durch diese Stauchung kann ebenfalls ein reibschlüssiger Kontakt zur Lochinnenwand hergestellt werden.

Nachteilig am herkömmlichen Stand der Technik kann sein, dass herkömmliche Lochgreifer meist aus einer Vielzahl von Bauteilen bestehen. Zudem können diese Lochgreifer aufgrund von notwendigen Komponenten aus Metall, z. B. für ein Gehäuse oder einen pneumatischen Antrieb, relativ schwer sein. Weitere Nachteile können bspw. darin bestehen, dass ein Verkippen oder Taumeln des mittels des Lochgreifers gehaltenen Gegenstandes kaum oder nur schwer ausgeschlossen werden kann.

Der Erfindung liegt die Aufgabe zu Grunde, einen verbesserten Lochgreifer zu schaffen, mit dem Nachteile im Stand der Technik überwunden werden können. Bevorzugt soll der Lochgreifer besonders einfach herstellbar, anpassbar und leicht sein.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft einen Lochgreifer (Expansionsgreifer, Balggreifer, Innengeifer), vorzugsweise für eine Behälterbehandlungsanlage. Der Lochgreifer weist einen Druckluftanschluss zum Anschließen einer Druckluftleitung auf. Der Lochgreifer weist einen elastisch verformbaren (ausdehnbaren) Balgabschnitt auf, der unter Druckluftbeaufschlagung zum (z. B. kraftschlüssigen und/oder formschlüssigen) Festklemmen in einem Bauteilloch eines Bauteils aufblasbar ist. Der Lochgreifer weist einen (z. B. länglichen) Verbindungsabschnitt mit einem Verbindungskanal, der den Druckluftanschluss und den Balgabschnitt zum Zuführen von Druckluft von dem Druckluftanschluss zu dem Balgabschnitt miteinander verbindet, auf. Der Druckluftanschluss, der Verbindungsabschnitt und der Balgabschnitt sind integral-einstückig miteinander verbunden.

Vorteilhaft ist es mit dem Lochgreifer möglich, viele Einzelteile, Montagezeiten und Gewicht einzusparen. Vorteilhaft kann zudem die Herstellung beispielsweise mittels additiver Fertigung besonders einfach sein und selbst im Prototypenstadium nur sehr geringe Produktionskosten im Vergleich zu herkömmlichen Lochgreifern entstehen.

In einem Ausführungsbeispiel sind der Druckluftanschluss, der Verbindungsabschnitt und der Balgabschnitt gemeinsam aus mehreren aneinander angrenzenden, vorzugsweise additiv gefertigten, Materialschichten gebildet, vorzugsweise aus einem (z. B. elastisch verformbaren) Kunststoff, z. B. einem thermoplastischen Polyurethan. Wie bereits erwähnt, kann die additive Fertigung zum Herstellen eines einteiligen Körpers aus Druckluftanschluss, Verbindungsabschnitt und Balgabschnitt besonders vorteilhaft sein. Die additive Fertigung kann zudem ermöglichen, dass eine individuelle Anpassung der Geometrien des Lochgreifers selbst bei extrem kleinen Stückzahlen bis herunter zu Stückzahl 1 ermöglicht wird. Vorteilhaft kann so immer der perfekte Greifer (z. B. Form, Noppen Ring(e), Hinterschnitt usw.) für die individuelle Applikation konzipiert werden. Durch die Wahl eines leichten Materials können vorteilhaft höhere Massen bewegt, schnellere Zykluszeiten erreicht und die Anwendung insgesamt effizienter gestaltet werden.

In einem weiteren Ausführungsbeispiel sind der Druckluftanschluss, der Verbindungsabschnitt und der Balgabschnitt aus einem gleichen Material, vorzugsweise einem (z. B. elastisch verformbaren) Kunststoff, z. B. einem thermoplastischen Polyurethan. Bevorzugt kann der Balgabschnitt aufgrund seiner geringeren Wandstärke als der Verbindungsabschnitt und der Druckluftanschluss unter Druckluftbeaufschlagung aufblasbar sein. Vorteilhaft kann somit eine einfache Herstellung ermöglicht werden, die zuverlässig die Funktion des aufblasbaren Balgabschnitts bereitstellen kann.

In einer Ausführungsform weist der Verbindungsabschnitt eine Ummantelung und/oder einen inneren Kern, vorzugsweise Vollkern oder Hohlkern, auf. Optional kann sich der Verbindungskanal, vorzugsweise ringförmig, zwischen der Ummantelung und dem inneren Kern erstrecken. Vorteilhaft kann auf diese Weise eine geeignete und zuverlässige Konstruktion des Verbindungskanals und des Verbindungsabschnitts ermöglicht werden.

In einer weiteren Ausführungsform sind die Ummantelung, der innere Kern und der Verbindungskanal koaxial zueinander angeordnet. Alternativ oder zusätzlich ist die Ummantelung im Wesentlichen rohrförmig. Alternativ oder zusätzlich ist der innere Kern im Wesentlichen zylinderförmig oder rohrförmig. Alternativ oder zusätzlich geht die Ummantelung in eine Außenwand des Balgabschnitts über. Alternativ oder zusätzlich erstreckt sich der innere Kern innen von einer Außenwand des Balgabschnitts zum Bilden einer Kammer für die Druckluft zwischen dem inneren Kern und der Außenwand. Vorteilhaft kann somit eine besonders geeignete und zuverlässige Konstruktion des Verbindungskanals, des Verbindungsabschnitts und des Balgabschnitts ermöglicht werden.

In einer weiteren Ausführungsvariante weist die Ummantelung eine größere Wandstärke auf als eine Außenwand des Balgabschnitts. Vorteilhaft kann man auf diese Weise erreichen, dass sich der Balgabschnitt unter Druckluftbeaufschlagung aufblasen kann, während die Ummantelung der Druckluftbeaufschlagung widersteht, ohne dass es hierfür nötig ist, dass die Ummantelung aus einem anderen Material ist als die Außenwand des Balgabschnitts.

Es ist jedoch beispielsweise auch möglich, dass die Ummantelung und die Außenwand des Balgabschnitts eine im Wesentlichen gleiche Wandstärke aufweisen. Zum Widerstehen der Druckluftbeaufschlagung kann die Ummantelung beispielsweise durch Verbindungsstege mit dem inneren Kern und/oder durch Verrippung und/oder durch eine äußere Abstützung, zum Beispiel ein Gehäuse, verstärkt sein.

In einem Ausführungsbeispiel weist der Verbindungsabschnitt ferner mehrere Verbindungsstege auf, die die Ummantelung und den inneren Kern aneinander abstützen. Optional können die mehreren Verbindungsstege entlang einer Längsachse des Lochgreifers und/oder um einen Außenumfang des inneren Kerns herum voneinander beabstandet angeordnet sein. Alternativ oder zusätzlich können sich die mehreren Verbindungsstege beispielsweise durch den Verbindungskanal hindurch erstrecken. Vorteilhaft kann damit eine Stabilität des Lochgreifers erheblich verbessert werden, und die Ummantelung kann der Druckluftbeaufschlagung besser widerstehen.

In einem Ausführungsbeispiel weist der Lochgreifer ferner einen, vorzugsweise metallischen, Stabilisatorstab, der sich längs durch den Verbindungsabschnitt, vorzugsweise durch einen rohrförmigen inneren Kern des Verbindungsabschnitts, hindurcherstreckt, vorzugsweise koaxial zu einer Längsachse des Lochgreifers, auf. Vorteilhaft kann damit die integral-einstückige Ausbildung des Druckluftanschlusses, des Verbindungsabschnitts und des Balgabschnitts verstärkt und stabilisiert werden. Beispielsweise kann der Stabilisatorstab nach dem additiven Fertigen des einteiligen Körpers aus Druckluftanschluss, Verbindungsabschnitt und Balgabschnitt in den einteiligen Körper eingesteckt und darin beispielsweise formschlüssig, kraftschlüssig und/oder stoffschlüssig gesichert werden.

In einem weiteren Ausführungsbeispiel weist der Stabilisatorstab einen (z. B. spitzen oder stumpfen) Zentrierabschnitt zum Zentrieren des Lochgreifers beim Einführen in das Bauteilloch auf. Vorteilhaft kann damit einerseits eine bessere Funktionsweise des Lochgreifers sichergestellt werden und andererseits eine Funktionsintegration im Stabilisatorstab ermöglicht werden.

Vorzugsweise kann der Zentrierabschnitt an einem über den Balgabschnitt überstehenden Ende des Stabilisatorstabs angeordnet sein.

In einem weiteren Ausführungsbeispiel weist der Lochgreifer einen (z. B. spitzen oder stumpfen) Zentrierabschnitt zum Zentrieren des Lochgreifers beim Einführen in das Bauteilloch auf. Vorzugsweise können der Druckluftanschluss, der Balgabschnitt, der Verbindungsabschnitt und der Zentrierabschnitt integral-einstückig miteinander verbunden sein. Alternativ oder zusätzlich können beispielsweise der Druckluftanschluss, der Verbindungsabschnitt, der Balgabschnitt und der Zentrierabschnitt gemeinsam aus mehreren aneinander angrenzenden, vorzugsweise additiv gefertigten, Materialschichten gebildet sein, vorzugsweise aus einem (z. B. elastisch verformbaren) Kunststoff, bevorzugt einem thermoplastischen Polyurethan. Vorteilhaft kann damit einerseits eine bessere Funktionsweise des Lochgreifers sichergestellt werden und andererseits die Zusatzfunktion des Zentrierens im einteiligen Körper und damit auf besonders einfache, z. B. additiv fertigbare, Weise ergänzt werden.

In einer Ausführungsform ist die Außenmantelfläche im Wesentlichen als eine Stumpfkegelmantelfläche oder eine Zylindermantelfläche geformt. Vorteilhaft kann mit einer Stumpfkegelmantelfläche bspw. eine Zentrierfunktion unterstützt werden, wohingegen eine Zylindermantelfläche besonders vorteilhaft zum Verhindern eines Taumelns oder Verkippens des gegriffenen Bauteils sein kann, z. B. bei dynamischen Bewegungen oder beim Schwenken in einer Horizontalebene.

In einer Ausführungsform kann die Außenmantelfläche texturiert (zum Beispiel mit einer vorbestimmten Textur) und/oder profiliert (zum Beispiel mit einer vorbestimmten Profilierung) sein. Alternativ oder zusätzlich kann die Außenmantelfläche Noppen, Zähne, Rippen oder Stege aufweisen. Alternativ oder zusätzlich kann die Außenmantelfläche mindestens einen teilweise oder vollständig umlaufenden Kragen (Bund) aufweisen (z. B. koaxial zu einer Längsachse des Lochgreifers). Vorteilhaft kann damit ein Reibschluss zwischen dem Balgabschnitt und dem Bauteilloch verbessert werden und/oder ein Hinterschnitt zum Hintergreifen des Bauteillochs bzw. Bauteils und somit höhere Haltekräfte ermöglicht werden. Durch eine Profilierung mit bspw. Stegen oder Rippen kann vorteilhaft im Bereich der Profilierung eine größere Wandstärke ermöglicht werden, um bspw. eine festere Anlagefläche gegenüber dem Bauteilloch zu erreichen.

Vorzugsweise kann die Texturierung und/oder Profilierung direkt beim additiven Fertigen des Balgabschnitts additiv mitgefertigt werden. Vorteilhaft kann damit eine besonders einfache Herstellung der Texturierung und/oder Profilierung erreicht werden, ohne dass hierfür ein separater Herstellungsschritt notwendig ist.

In einer weiteren Ausführungsform kann der Druckluftanschluss koaxial zu einer Längsachse des Lochgreifers angeordnet sein. Vorteilhaft damit eine besonders einfache und zuverlässige Konstruktion des Lochgreifers ermöglicht werden.

Alternativ kann der Druckluftanschluss beispielsweise angewinkelt, vorzugsweise im rechten Winkel angewinkelt, zu einer Längsachse des Lochgreifers angeordnet sein. Vorteilhaft kann damit beispielsweise Bauraum für ein Verstärkungsbauteil, zum Beispiel einen Stabilisatorstab, geschaffen werden.

In einer Ausführungsvariante weist der Lochgreifer ferner ein (z. B. mehrteiliges) Gehäuse auf, in dem der Verbindungsabschnitt, vorzugsweise formschlüssig, zumindest abschnittsweise aufgenommen ist. Besonders bevorzugt kann der Balgabschnitt und optional der Zentrierabschnitt außerhalb des Gehäuses angeordnet sein. Vorzugsweise können die Ummantelung und eine Außenwand des Balgabschnitts eine im Wesentlichen gleiche Wandstärke aufweisen. Vorteilhaft kann damit ermöglicht werden, dass beispielsweise der Druckluftanschluss und/oder der Verbindungsabschnitt vergleichsweise dünnwandig ausgeführt werden kann, da das Gehäuse eine Abstützung von außen her ermöglicht. Dadurch kann beispielsweise der Verbindungsabschnitt der Druckluftbeaufschlagung widerstehen, ohne selbst besonders stabil ausgeführt zu sein.

Beispielsweise kann der optionale Stabilisatorstab direkt an dem Gehäuse abgestützt sein.

Ein weiterer Aspekt der vorliegenden Offenbarung betrifft eine Handhabungsvorrichtung, vorzugsweise einen Handhabungsroboter (z. B. Wechselroboter), aufweisend den Lochgreifer.

Beispielsweise kann die Handhabungsvorrichtung ein stationärer oder mobiler Roboter oder jegliche andere Art von Handhabungsvorrichtung sein. Vorzugsweise kann die Handhabungsvorrichtung mindestens einen verschwenkbaren und/oder verschiebbaren Arm aufweisen. Optional kann der Lochgreifer an dem Arm, z. B. an einem Ende des Arms, angebracht und von diesem getragen sein.

Ein weiterer Aspekt der vorliegenden Offenbarung betrifft eine Verwendung eines Lochgreifers wie hierin offenbart in einer Behälterbehandlungsanlage, vorzugsweise zum Greifen eines Behälterdrehtellers.

Ein weiterer Aspekt der vorliegenden Offenbarung betrifft eine Behälterbehandlungsanlage (z. B. zum Herstellen, Reinigen, Beschichten, Prüfen, Abfüllen, Verschließen, Etikettieren, Bedrucken, Beschriften, Laserbeschriften und/oder Verpacken von Behältern für flüssige Medien, vorzugsweise Getränke oder flüssige Nahrungsmittel) aufweisend einen Lochgreifer wie hierin offenbart oder eine Handhabungseinrichtung wie hierin offenbart.

Beispielsweise können die Behälter als Flaschen, Dosen, Kanister, Kartons, Flakons, Tuben usw. ausgeführt sein.

Ein weiterer Aspekt der vorliegenden Offenbarung betrifft ein Verfahren zum Herstellen eines Lochgreifers, zum Beispiel wie hierin offenbart. Das Verfahren weist ein additives Fertigen des Druckluftanschlusses, des Verbindungsabschnitts und des Balgabschnitts zu einem einteiligen Körper, vorzugsweise in einem Pulverbettverfahren und/oder aus einem (z. B. elastisch verformbaren) Kunststoff, bevorzugt einem thermoplastischen Polyurethan, auf. Vorteilhaft können mit dem Verfahren die gleichen Vorteile erzielt werden, die bereits unter Bezugnahme auf den Lochgreifer beschrieben wurden.

Ein weiterer Aspekt der vorliegenden Offenbarung betrifft ein Computerprogrammprodukt aufweisend (z. B. mindestens ein computerlesbares Speichermedium mit darauf gespeicherten) Anweisungen, die eine additive Fertigungsvorrichtung (z. B. 3D-Drucker) veranlassen, einen Lochgreifer wie hierin offenbart in einer Vielzahl von Schichten in einem additiven Fertigungsverfahren, vorzugsweise Pulverbettverfahren, herzustellen, oder ein Verfahren wie hierin offenbart durchzuführen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht eines Lochgreifers gemäß einem Ausführungsbeispiel der vorliegenden Offenbarung;
- Figur 2: eine perspektivische Schnittansicht des beispielhaften Lochgreifers von Figur 1;
- Figur 3: eine Schnittansicht des beispielhaften Lochgreifers von Figur 1 im Eingriff mit einem Bauteil;
- Figur 4: eine perspektivische Ansicht eines beispielhaften Balgabschnitts;
- Figur 5: eine perspektivische Ansicht eines weiteren beispielhaften Balgabschnitts;
- Figur 6: eine perspektivische Ansicht eines weiteren anderen beispielhaften Balgabschnitts;
- Figur 7: eine Schnittansicht eines Lochgreifers gemäß einem Ausführungsbeispiel der vorliegenden Offenbarung im Eingriff mit einem Bauteil;
- Figur 8: eine Schnittansicht eines Lochgreifers gemäß einem Ausführungsbeispiel der vorliegenden Offenbarung im Eingriff mit einem Bauteil;
- Figur 9: eine perspektivische Ansicht eines Lochgreifers gemäß einem Ausführungsbeispiel der vorliegenden Offenbarung;
- Figur 10: eine perspektivische Ansicht eines einteiligen Körpers des beispielhaften Lochgreifers von Figur 9; und
- Figur 11: eine Schnittansicht des beispielhaften Lochgreifers von Figur 9 im Eingriff mit einem Bauteil.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

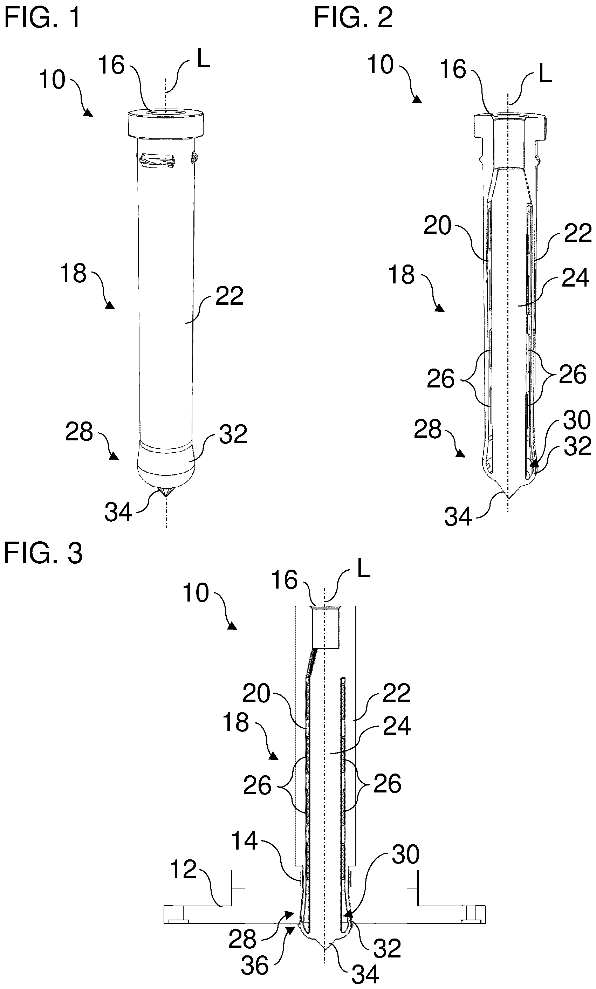

Die Figuren 1 bis 3 zeigen einen Lochgreifer 10. Bevorzugt ist der Lochgreifer 10 als ein sogenannter Tieflochgreifer ausgebildet. Der Lochgreifer 10 kann auch als ein Expansionsgreifer, ein Balggreifer oder ein Innengreifer bezeichnet werden.

Wie in Figur 3 beispielhaft dargestellt ist, kann mit dem Lochgreifer 10 ein Bauteil 12 gegriffen und gehandhabt werden. Der Lochgreifer 10 kann das Bauteil 12 in bzw. an einem Bauteilloch 14 des Bauteils 12 greifen. Der Lochgreifer 10 kann sich in dem Bauteilloch 14 form- und kraftschlüssig festklemmen. Das festgeklemmte Bauteil 12 kann zusammen mit dem Lochgreifer 10 bewegt werden.

Bevorzugt kann der Lochgreifer 10 in einer Behälterbehandlungsanlage verwendet werden. Beispielsweise kann das Bauteil 12 als ein Behälterdrehteller ausgeführt sein. Es ist auch möglich, dass der Lochgreifer 10 zum Greifen von Behältern, Garniturteilen oder Formatteilen in einer Behälterbehandlungsanlage verwendet wird. Es ist ebenfalls möglich, dass der Lochgreifer 10 in einer Umgebung, die sich von einer Behälterbehandlungsanlage unterscheidet, zum Greifen irgendeines Bauteils 12 mit einem Bauteilloch 14 verwendet wird.

Der Lochgreifer 10 kann von jeglicher Handhabungsvorrichtung als Greifwerkzeug getragen sein. Beispielsweise kann der Lochgreifer 10 ein Endeffektor eines Handhabungsroboters, wie z. B. ein Wechselroboter, oder einer anderen Handhabungsvorrichtung sein.

Der Lochgreifer 10 kann ein im Wesentlichen längliches, vorzugsweise einteiliges, Bauteil sein. Der Lochgreifer 10 kann eine (z. B. Mittel-) Längsachse L aufweisen.

Der Lochgreifer 10 weist einen Druckluftanschluss 16, einen Verbindungsabschnitt 18 und einen Balgabschnitt 28 auf. Optional kann der Lochgreifer 10 bspw. noch einen Zentrierabschnitt 34 aufweisen.

Der Druckluftanschluss 16, der Verbindungsabschnitt 18, der Balgabschnitt 28 und optional der Zentrierabschnitt 34 sind integral-einstückig miteinander verbunden. Der Druckluftanschluss 16, der Verbindungsabschnitt 18, der Balgabschnitt 28 und optional der Zentrierabschnitt 34 können gemeinsam einen einteiligen Körper bilden. Es ist auch möglich, dass der Zentrierabschnitt 34 zwar vorhanden ist, aber nicht integral-einstückig mit dem Druckluftanschluss 16, dem Verbindungsabschnitt 18 und dem Balgabschnitt 28 verbunden ist bzw. einen einteiligen Körper mit diesen bildet.

Besonders bevorzugt kann der einteilige Körper aus mehreren aneinander angrenzenden, additiv gefertigten Materialschichten gebildet sein. Vorzugsweise kann der einteilige Körper in einem Pulverbettverfahren additiv gefertigt werden. Im Einzelnen können der Druckluftanschluss 16, der Verbindungsabschnitt 18, der Balgabschnitt 28 und optional der Zentrierabschnitt 34 gemeinsam aus mehreren aneinander angrenzenden, additiv gefertigten Materialschichten gebildet sein. Bevorzugt können die Materialschichten aus einem Kunststoff, vorzugsweise aus einem thermoplastischen Polyurethan, sein.

Anweisungen zum Veranlassen einer additiven Fertigungseinrichtung zum additiven Fertigen des Lochgreifers 10 bzw. des einteiligen Körpers aus Druckluftanschluss 16, Verbindungsabschnitt 18, Balgabschnitt 28 und optional Zentrierabschnitt 34 können in einem Computerprogrammprodukt (z. B. Datei(en) oder Datenträger mit Datei(en)) gespeichert sein.

An den Druckluftanschluss 16 ist eine Druckluftleitung anschließbar (nicht in den Figuren dargestellt). Über die Druckluftleitung kann der Lochgreifer 10 betätigt werden. Die Druckluftleitung kann lösbar an dem Druckluftanschluss 16 angeschlossen werden. Beispielsweise kann die Druckluftleitung kraft- und/oder formschlüssig mit dem Druckluftanschluss 16 verbunden sein. Beispielsweise können der Druckluftanschluss 16 und die Druckluftleitung über eine Schraub- oder Klemmverbindung lösbar miteinander verbunden werden.

Der Druckluftanschluss 16 kann an einem Ende des Lochgreifers 10 angeordnet sein. Das Ende ist vorzugsweise ein dem zu greifenden Bauteil 12 entgegengesetztes Ende des Lochgreifers 10.

Der Druckluftanschluss 16 kann koaxial zu der Längsachse L des Lochgreifers 10 angeordnet sein.

Es ist möglich, dass der Druckluftanschluss 16 ebenfalls zur Montage des Lochgreifers 10 an der Handhabungsvorrichtung (nicht in den Figuren dargestellt) dient. Alternativ oder zusätzlich kann der Lochgreifer 10 bspw. einen zusätzlichen Montageabschnitt zur, vorzugsweise kraft- und/oder formschlüssigen, Montage des Lochgreifers 10 an der Handhabungsvorrichtung aufweisen.

Der Verbindungsabschnitt 18 kann den Druckluftanschluss 16 und den Balgabschnitt 28 miteinander verbinden. Der Verbindungsabschnitt 18 kann länglich sein. Der Verbindungsabschnitt 18 kann zwischen dem Druckluftanschluss 16 und dem Balgabschnitt 28 angeordnet sein.

Der Verbindungsabschnitt 18 weist einen (Druckluft-) Verbindungskanal 20 auf. Optional kann der Verbindungsabschnitt 18 bspw. noch eine Ummantelung 22, einen inneren Kern 24 und/oder mehrere Verbindungsstege 26 aufweisen.

Der Verbindungskanal 20 verbindet den Druckluftanschluss 16 und den Balgabschnitt 28 miteinander. Der Druckluftanschluss 16 kann in den Verbindungskanal 20 münden. Der Verbindungskanal 20 kann in den Balgabschnitt 28 münden, z. B. in dessen Kammer 30.

Über den Verbindungskanal 20 kann Druckluft von dem Druckluftanschluss 16 zu dem Balgabschnitt 28 zugeführt werden. Vorzugsweise kann der Balgabschnitt 28 auch über den Verbindungskanal 20 und den Druckluftanschluss 16 entlastet werden.

Der Verbindungskanal 20 kann sich parallel, vorzugsweise koaxial, zu der Längsachse L des Lochgreifers 10 erstrecken.

Der Verbindungskanal 20 kann ringförmig sein bzw. als ein Ringkanal ausgeführt sein. Vorzugsweise kann der Verbindungskanal 20 als im Wesentlichen ringförmiger Hohlraum zwischen der Ummantelung 22 und dem inneren Kern 24 gebildet sein.

Die Ummantelung 22 kann im Wesentlichen rohrförmig sein. Die Ummantelung 22 kann sich vorzugsweise koaxial zu der Längsachse L des Lochgreifers 10 erstrecken. Die Ummantelung 22 kann den Verbindungskanal 20 und den inneren Kern 24 ummanteln bzw. einhausen.

Wie in den Figuren 1 bis 3 dargestellt ist, kann der innere Kern 24 als Vollkern ausgeführt sein. Der Vollkern kann im Wesentlichen zylinderförmig sein. Alternativ kann der innere Kern 24 bspw. als ein Hohlkern ausgeführt sein. Der Hohlkern kann bspw. im Wesentlichen rohrförmig sein.

Der innere Kern 24, der Verbindungskanal 20 und die Ummantelung 22 können koaxial zueinander angeordnet sein; mit dem Verbindungskanal 20 innerhalb der Ummantelung 22 und dem inneren Kern 24 innerhalb des Verbindungskanals 20.

Die Verbindungsstege 26 können die Ummantelung 22 und den inneren Kern 24 aneinander abstützen. Die Verbindungsstege 26 können zwischen der Ummantelung 22 und dem inneren Kern 24 angeordnet sein. Die Verbindungsstege 26 können die Ummantelung 22 und den inneren Kern 24 miteinander verbinden. Die Verbindungsstege 26 können sich durch den Verbindungskanal 20 hindurch erstrecken.

Die Verbindungsstege 26 können jeweils einerseits in eine Innenumfangsfläche der Ummantelung 22 übergehen. Die Verbindungsstege 26 können jeweils andererseits in einen Außenumfang des inneren Kerns 24 übergehen. Die Verbindungsstege 26 können entlang der Längsachse L des Lochgreifers 10 beabstandet voneinander angeordnet sein. Alternativ oder zusätzlich können die Verbindungsstege 26 um einen Außenumfang des inneren Kerns 24 bzw. um einen Innenumfang der Ummantelung 22 herum voneinander beabstandet angeordnet sein.

Bevorzugt sind mehrere (z. B. vier) Gruppen von Verbindungsstegen 26 umfasst. Die Gruppen können entlang der Längsachse L des Lochgreifers 10 beabstandet voneinander angeordnet sein. Jede Gruppe kann mehrere Verbindungsstege 26 aufweisen, die um einen Außenumfang des inneren Kerns 24 bzw. um einen Innenumfang der Ummantelung 22 herum voneinander beabstandet angeordnet sein können.

Vorzugsweise sind die Verbindungsstege 26 jeweils länglich ausgeführt. Die Längsachsen der Verbindungsstege 26 sind bevorzugt parallel zu der Längsachse L des Lochgreifers 10.

Der Balgabschnitt 28 ist elastisch verformbar bzw. ausdehnbar. Der Balgabschnitt 28 ist unter Druckluftbeaufschlagung zum Festklemmen in dem Bauteilloch 14 aufblasbar. Zum Aufblasen des Balgabschnitts 28 kann Druckluft von dem Druckluftanschluss 16 über den Verbindungskanal 20 zu dem Balgabschnitt 28 zugeführt werden.

Der Balgabschnitt 28 kann eine Balgform aufweisen. Die Balgform kann bspw. rotationssymmetrisch sein. Alternativ kann die Balgform jegliche andere geeignete Form aufweisen, z. B. mit einem schlitzförmigen, langlochförmigen oder mehrkantförmigen (z. B. vierkantförmigen) Querschnitt.

Der Balgabschnitt 28 kann vorzugsweise durch eine, vorzugsweise ringförmige, Kammer 30 und eine Außenwand 32 gebildet sein.

Vorzugsweise kann der Verbindungskanal 20 in die Kammer 30 münden. Beispielsweise kann die Kammer 30 einen Abschnitt des inneren Kerns 24 ringförmig umgeben. Bevorzugt kann die Kammer 30 koaxial zu der Längsachse L angeordnet sein.

Bevorzugt kann die Außenwand 32 rohrförmig sein. Vorzugsweise kann die Außenwand 32 die Kammer 30 umgeben. Unter Druckluftbeaufschlagung der Kammer 30 kann die Außenwand 32 bezüglich der Längsachse L beispielsweise radial nach außen ausgedehnt bzw. aufgeblasen werden.

Die Außenwand 32 kann in die Ummantelung 22 übergehen. Die Außenwand 32 kann die Ummantelung 22 in einer Richtung hin zu einem freien Ende des Lochgreifers 10 verlängern.

Der Balgabschnitt 28 kann aufgrund seiner geringeren Wandstärke als der Verbindungsabschnitt 18 und der Druckluftanschluss 16 unter Druckluftbeaufschlagung aufblasbar sein. Beispielsweise kann die Außenwand 32 des Balgabschnitts 28 eine geringere Wandstärke aufweisen als die Ummantelung 22 des Verbindungsabschnitts 18.

Die Außenwand 32 kann bspw. eine Wandstärke ≤ 2 mm oder ≤1,5 mm oder ≤ 1 mm aufweisen.

Der Balgabschnitt 28 / die Außenwand 32 kann sich entlang der Längsachse L hin zu einem freien Ende des Lochgreifers 10 erweitern und/oder verjüngen. Beispielsweise kann der Balgabschnitt 28 / die Außenwand 32 eine Kegelstumpfform aufweisen. Vorzugsweise kann sich der Balgabschnitt 28 / die Außenwand 32 entlang der Längsachse L in einer Richtung hin zu einem freien Ende des Lochgreifers 10 erweitern.

Alternativ kann der Balgabschnitt 28 / die Außenwand 32 beispielsweise zylinderförmig sein. Die Außenwand 32 kann einen konstanten Durchmesser entlang der Längsachse L aufweisen.

Der Zentrierabschnitt 34 kann zum Zentrieren des Lochgreifers 10 beim Einführen in das Bauteilloch 14 dienen. Beispielsweise kann der Zentrierabschnitt 34 spitz, z. B. spitzkegelförmig, oder stumpf, z. B. stumpfkegelförmig, ausgebildet sein.

Der Zentrierabschnitt 34 kann an einem freien Ende des Lochgreifers 10 angeordnet sein. Der Zentrierabschnitt 34 kann in den inneren Kern 24 und/oder in den Balgabschnitt 28, vorzugsweise dessen Außenwand 32, übergehen.

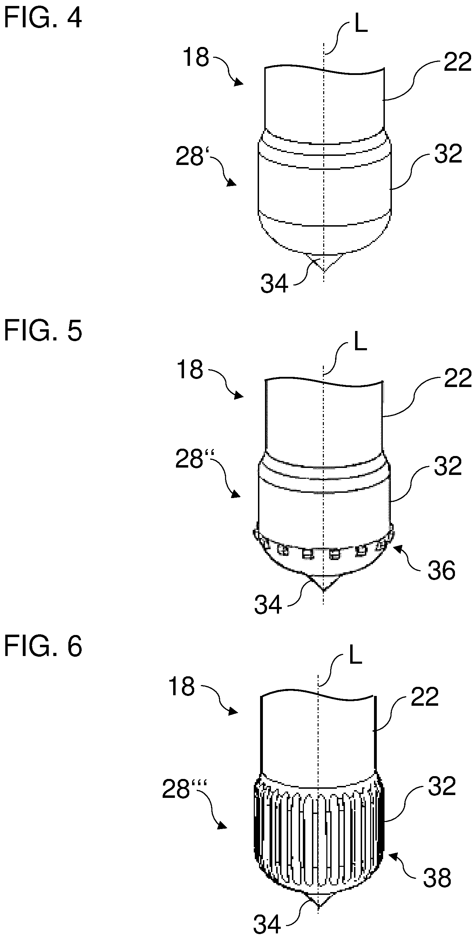

Die Figuren 4 bis 6 zeigen unterschiedliche, beliebig miteinander kombinierbare Varianten des Balgabschnitts 28.

Die Figur 4 zeigt einen Balgabschnitt 28', der im Wesentlichen zylinderförmig ist.

Eine Außenmantelfläche der Außenwand 32 kann im Wesentlichen einer Zylindermantelfläche entsprechen. Alternativ kann eine Außenmantelfläche der Außenwand 32 bspw. im Wesentlichen eine Kegelstumpfmantelfläche sein (siehe auch Figuren 1 bis 3).

Die Figur 5 zeigt einen Balgabschnitt 28", der eine Außenwand 32 mit einer profilierten Außenmantelfläche aufweist.

Die Außenmantelfläche kann mehrere Noppen 36 aufweisen. Die Noppen 36 können bspw. als Zähne ausgeführt sein. Vorzugsweise können die Noppen 36 in einem oder mehreren Ringen, die entlang der Längsachse L voneinander beabstandet sein können, angeordnet sein. Die Noppen 36 können verteilt um einen Umfang der Außenmantelfläche herum verteilt angeordnet sein, vorzugsweise äquidistant.

Bevorzugt können die Noppen 36 an einem hin zum freien Ende des Lochgreifer 10 gewandten Ende des Balgabschnitts 28" angeordnet sein. Vorzugsweise können die Noppen 36 damit einen Hinterschnitt bilden, um hinter das Bauteilloch 14 zum Verbessern der Greifwirkung greifen zu können (siehe auch Figur 3).

Alternativ kann ein Hinterschnitt bspw. durch einen teilweise oder vollständig umlaufenden Kragen (Bund) der Außenmantelfläche gebildet sein. Vorzugsweise kann der Kragen an einem hin zum freien Ende des Lochgreifer 10 gewandten Ende des Balgabschnitts 28" angeordnet sein.

Die Figur 6 zeigt einen Balgabschnitt 28"', der eine Außenwand 32 mit einer profilierten Außenmantelfläche aufweist.

Die Außenmantelfläche kann mehrere Rippen (Stege) 38 aufweisen. Vorzugsweise können die Rippen 38 in einem oder mehreren Ringen, die entlang der Längsachse L voneinander beabstandet sein können, angeordnet sein. Die Rippen 38 können verteilt um einen Umfang der Außenmantelfläche herum verteilt angeordnet sein, vorzugsweise äquidistant. Längsachsen der Rippen 38 können vorzugsweise parallel zu der Längsachse L des Lochgreifers 10 sein.

Alternativ oder zusätzlich zu einer Profilierung der Außenmantelfläche ist es bspw. auch möglich, dass die Außenmantelfläche der Außenwand 32 mit einer vorbestimmten Textur texturiert ist.

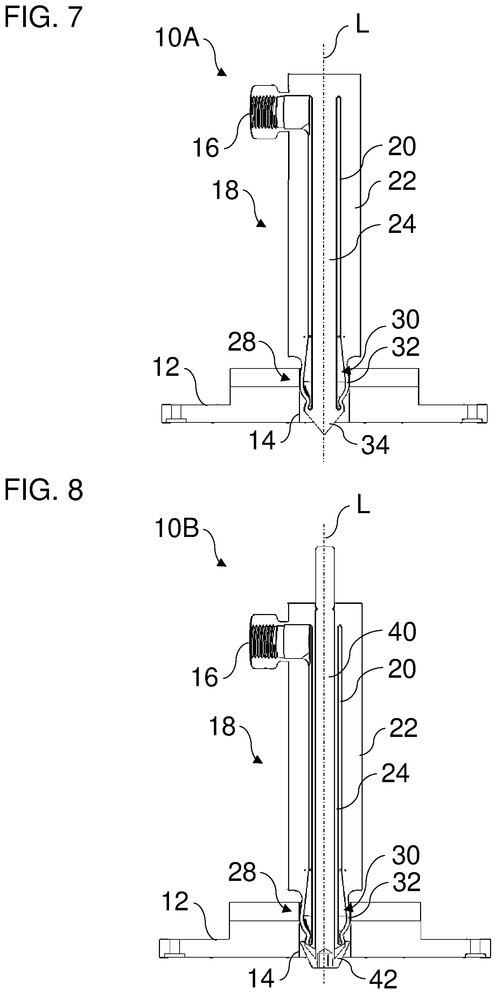

Die Figur 7 zeigt einen Lochgreifer 10A mit einem Druckluftanschluss 16.

Der Druckluftanschluss 16 kann angewinkelt zu der Längsachse L des Lochgreifers 10A angeordnet bzw. ausgerichtet sein. Vorzugsweise kann der Druckluftanschluss 16 im rechten Winkel angewinkelt zu der Längsachse L des Lochgreifers 10A angeordnet sein.

Die Figur 8 zeigt einen Lochgreifer 10B mit einem Stabilisatorstab 40.

Der Stabilisatorstab 40 kann sich durch den Verbindungsabschnitt 18 erstrecken. Vorzugsweise kann sich der Stabilisatorstab 40 durch den hohlen inneren Kern 24 erstrecken, bevorzugt bis hin zu einem freien Ende des Lochgreifers 10B. Im Einzelnen kann der innere Kern 24 einen Aufnahmekanal aufweisen, in dem der Stabilisatorstab 40 aufgenommen ist.

Der Stabilisatorstab 40 kann sich parallel, vorzugsweise koaxial, zu der Längsachse L des Lochgreifers 10B erstrecken. Beispielsweise kann sich der Stabilisatorstab 40 zwischen entgegensetzen Enden des Lochgreifers 10B erstrecken.

Der Stabilisatorstab 40 kann vorzugsweise ein Vollstab sein. Bevorzugt kann der Stabilisatorstab 40 metallisch sein.

Vorzugsweise kann der Stabilisatorstab 40 einen Zentrierabschnitt 42 zum Zentrieren des Lochgreifers 10B beim Einführen in das Bauteilloch 14 aufweisen. Beispielsweise kann der Zentrierabschnitt 42 spitz, z. B. spitzkegelförmig, oder stumpf, z. B. stumpfkegelförmig, ausgebildet sein. Vorzugsweise kann der Zentrierabschnitt 42 in einem entlang der Längsachse L des Lochgreifers 10 über den Balgabschnitt 28 überstehenden Endbereich des Stabilisatorstabs 40 angeordnet sein.

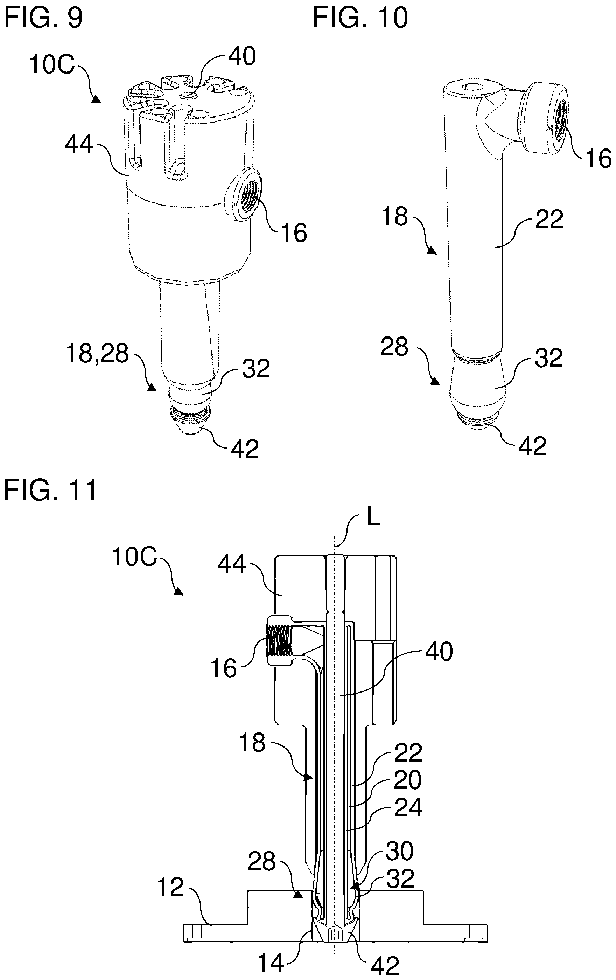

Die Figuren 9 bis 11 zeigen einen Lochgreifer 10C mit einem Gehäuse 44.

Vorzugsweise kann das Gehäuse 44 den Druckluftanschluss 16 und den Verbindungsabschnitt 18 sowie optional den Stabilisatorstab 40 jeweils zumindest abschnittsweise aufnehmen.

Bevorzugt ist der Balgabschnitt 28 vollständig außerhalb des Gehäuses 44 angeordnet. Besonders bevorzugt ist der Verbindungsabschnitt 18 bis hin zu einem Übergang zu dem Balgabschnitt 28 in dem Gehäuse 44 aufgenommen. Der optionale Zentrierabschnitt 42 (oder 34) kann ebenfalls außerhalb des Gehäuses 44 angeordnet sein.

Vorzugsweise kann der Verbindungsabschnitt 18 und optional der Druckluftanschluss 16 formschlüssig in dem Gehäuse 44 aufgenommen sein. Beispielsweise kann eine innere Aufnahmekammer des Gehäuses 44 formangepasst zu einer Außenform des Druckluftanschlusses 16 und/oder des Verbindungsabschnitts 18 sein.

Bevorzugt ist das Gehäuse 44 mehrteilig, z. B. zweiteilig. Eine Trennfuge des Gehäuses 44 kann bspw. im Bereich des Druckluftanschlusses 16 angeordnet sein. Beispielsweise kann das Gehäuse 44 aus mehreren, z. B. zwei, Gehäuseschalen gebildet sein. Die Gehäuseteile oder -schalen können lösbar aneinander befestigbar sein, z. B. mittels Schraubverbindung(en). Bevorzugt können die Gehäuseschalen als Gehäusehalbschalen ausgeführt sein.

Es versteht sich, dass die einzelnen Merkmale der Lochgreifer 10, 10A, 10B und 10C beliebig miteinander kombinierbar und austauschbar sind.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Druckluftanschlusses, des Verbindungsabschnitts und/oder des Balgabschnitts des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Lochgreifer
- 12: Bauteil
- 14: Bauteilloch
- 16: Druckluftanschluss
- 18: Verbindungsabschnitt
- 20: Verbindungskanal
- 22: Ummantelung
- 24: innerer Kern
- 26: Verbindungssteg
- 28: Balgabschnitt
- 30: Kammer
- 32: Außenwand
- 34: Zentrierabschnitt
- 36: Noppen
- 38: Rippen
- 40: Stabilisatorstab
- 42: Zentrierabschnitt
- 44: Gehäuse

- L: Längsachse

## Patentansprüche

1. Lochgreifer (10), vorzugsweise für eine Behälterbehandlungsanlage, wobei der Lochgreifer (10) aufweist:
einen Druckluftanschluss (16) zum Anschließen einer Druckluftleitung;
einen elastisch verformbaren Balgabschnitt (28), der unter Druckluftbeaufschlagung zum Festklemmen in einem Bauteilloch (14) eines Bauteils (12) aufblasbar ist; und
einen Verbindungsabschnitt (18) mit einem Verbindungskanal (20), der den Druckluftanschluss (16) und den Balgabschnitt (28) zum Zuführen von Druckluft von dem Druckluftanschluss (16) zu dem Balgabschnitt (28) miteinander verbindet,
wobei der Druckluftanschluss (16), der Verbindungsabschnitt (18) und der Balgabschnitt (28) integral-einstückig miteinander verbunden sind.

2. Lochgreifer (10) nach Anspruch 1, wobei:
der Druckluftanschluss (16), der Verbindungsabschnitt (18) und der Balgabschnitt (28) gemeinsam aus mehreren aneinander angrenzenden, vorzugsweise additiv gefertigten, Materialschichten gebildet sind, vorzugsweise aus einem Kunststoff, z. B. einem thermoplastischen Polyurethan; und/oder
der Druckluftanschluss (16), der Verbindungsabschnitt (18) und der Balgabschnitt (28) aus einem gleichen Material, vorzugsweise einem Kunststoff, z. B. einem thermoplastischen Polyurethan, sind und der Balgabschnitt (28) aufgrund seiner geringeren Wandstärke als der Verbindungsabschnitt (18) und der Druckluftanschluss (16) unter Druckluftbeaufschlagung aufblasbar ist.

3. Lochgreifer (10) nach Anspruch 1 oder Anspruch 2, wobei:
der Verbindungsabschnitt (18) eine Ummantelung (22) und einen inneren Kern (24), vorzugsweise Vollkern oder Hohlkern, aufweist; und
der Verbindungskanal (20) sich, vorzugsweise ringförmig, zwischen der Ummantelung (22) und dem inneren Kern (24) erstreckt.

4. Lochgreifer (10) nach Anspruch 3, wobei mindestens eines erfüllt ist von:
die Ummantelung (22), der innere Kern (24) und der Verbindungskanal (20) sind koaxial zueinander angeordnet;
die Ummantelung (22) ist im Wesentlichen rohrförmig;
der innere Kern (24) ist im Wesentlichen zylinderförmig oder rohrförmig;
die Ummantelung (22) geht in eine Außenwand des Balgabschnitts (28) über;
der innere Kern (24) erstreckt sich innen von einer Außenwand (32) des Balgabschnitts (28) zum Bilden einer Kammer (30) für die Druckluft zwischen dem inneren Kern (24) und der Außenwand (32); und
die Ummantelung (22) weist eine größere Wandstärke auf als eine Außenwand (32) des Balgabschnitts (28).

5. Lochgreifer (10) nach einem der vorherigen Ansprüche, wobei:
der Verbindungsabschnitt (18) ferner mehrere Verbindungsstege (26) aufweist, die die Ummantelung (22) und den inneren Kern (24) aneinander abstützen, und optional:
- die mehreren Verbindungsstege (26) entlang einer Längsachse (L) des Lochgreifers (10) und/oder um einen Außenumfang des inneren Kerns (24) herum voneinander beabstandet angeordnet sind; und/oder
- die mehreren Verbindungsstege (26) sich durch den Verbindungskanal (20) hindurch erstrecken.

6. Lochgreifer (10B, 10C) nach einem der vorherigen Ansprüche, ferner aufweisend:
einen, vorzugsweise metallischen, Stabilisatorstab (40), der sich längs durch den Verbindungsabschnitt (18), vorzugsweise durch einen rohrförmigen inneren Kern (24) des Verbindungsabschnitts (18), hindurcherstreckt, vorzugsweise koaxial zu einer Längsachse (L) des Lochgreifers (10).

7. Lochgreifer (10B, 10C) nach Anspruch 6, wobei:
der Stabilisatorstab (40) einen Zentrierabschnitt (42) zum Zentrieren des Lochgreifers (10) beim Einführen in das Bauteilloch (14) aufweist.

8. Lochgreifer (10, 10A) nach einem der Ansprüche 1 bis 6, ferner aufweisend:
einen Zentrierabschnitt (34) zum Zentrieren des Lochgreifers (10) beim Einführen in das Bauteilloch (14).

9. Lochgreifer (10) nach Anspruch 8, wobei:
der Druckluftanschluss (16), der Balgabschnitt (28), der Verbindungsabschnitt (18) und der Zentrierabschnitt (34) integral-einstückig miteinander verbunden sind; und/oder
der Druckluftanschluss (16), der Verbindungsabschnitt (18), der Balgabschnitt (28) und der Zentrierabschnitt (34) gemeinsam aus mehreren aneinander angrenzenden, vorzugsweise additiv gefertigten, Materialschichten gebildet sind, vorzugsweise aus einem Kunststoff, bevorzugt einem thermoplastischen Polyurethan.

10. Lochgreifer (10) nach einem der vorherigen Ansprüche, wobei der Balgabschnitt (28) eine Außenmantelfläche aufweist und mindestens eines erfüllt ist von:
die Außenmantelfläche ist im Wesentlichen als eine Stumpfkegelmantelfläche oder eine Zylindermantelfläche geformt;
die Außenmantelfläche ist texturiert und/oder profiliert;
die Außenmantelfläche weist Noppen (36), Zähne, Rippen (38) oder Stege (38) auf; und
die Außenmantelfläche weist mindestens einen teilweise oder vollständig umlaufenden Kragen auf.

11. Lochgreifer (10) nach einem der vorherigen Ansprüche, wobei:
der Druckluftanschluss (16) koaxial zu einer Längsachse (L) des Lochgreifers (10) angeordnet ist; oder
der Druckluftanschluss (16) angewinkelt, vorzugsweise im rechten Winkel angewinkelt, zu einer Längsachse (L) des Lochgreifers (10) angeordnet ist.

12. Lochgreifer (10C) nach einem der vorherigen Ansprüche, ferner aufweisend:
ein Gehäuse (44), in dem der Verbindungsabschnitt (18), vorzugsweise formschlüssig, zumindest abschnittsweise aufgenommen ist, wobei der Balgabschnitt (28) außerhalb des Gehäuses (44) angeordnet ist, wobei optional
die Ummantelung (22) und eine Außenwand (32) des Balgabschnitts (28) eine im Wesentlichen gleiche Wandstärke aufweisen.

13. Verwendung eines Lochgreifers (10) nach einem der vorherigen Ansprüche in einer Behälterbehandlungsanlage, vorzugsweise zum Greifen eines Behälterdrehtellers.

14. Verfahren zum Herstellen eines Lochgreifers (10) nach einem der vorherigen Ansprüche, aufweisend:
Additives Fertigen des Druckluftanschlusses (16), des Verbindungsabschnitts (18) und des Balgabschnitts (28) zu einem einteiligen Körper, vorzugsweise in einem Pulverbettverfahren und/oder aus einem Kunststoff, bevorzugt einem thermoplastischen Polyurethan.

15. Computerprogrammprodukt aufweisend Anweisungen, die eine additive Fertigungsvorrichtung veranlassen:
einen Lochgreifer (10) nach einem der Ansprüche 1 bis 13 in einer Vielzahl von Schichten in einem additiven Fertigungsverfahren, vorzugsweise Pulverbettverfahren, herzustellen; oder
ein Verfahren nach Anspruch 14 durchzuführen.
